Europäisches Patentamt

European Patent Office

Office européen des brevets

(19)

(11) Veröffentlichungsnummer : **0 111 049**
B1

(12)

# EUROPÄISCHE PATENTSCHRIFT

(45) Veröffentlichungstag der Patentschrift :
06.05.87

(21) Anmeldenummer : 83107595.7

(22) Anmeldetag : 02.08.83

(51) Int. Cl.⁴ : **B 63 H   3/08**, F 15 B   9/04,
F 01 D   7/00

(54) Einrichtung zum Verstellen der Flügelblätter von Strömungsmaschinen.

(30) Priorität : 09.10.82 DE 3237516

(43) Veröffentlichungstag der Anmeldung :
20.06.84 Patentblatt 84/25

(45) Bekanntmachung des Hinweises auf die Patenterteilung : 06.05.87 Patentblatt 87/19

(84) Benannte Vertragsstaaten :
DE FR GB IT

(56) Entgegenhaltungen :
DE-A- 2 708 496
DE-B- 1 175 554
FR-A-   861 296
US-A- 2 770 099

(73) Patentinhaber : Thyssen Industrie AG
Am Thyssenhaus 1
D-4300 Essen 1 (DE)

(72) Erfinder : Schönemann, Fritz
In den Höfen 8
D-5810 Witten-Annen (DE)

(74) Vertreter : Eberhard, Friedrich, Dr.
Am Thyssenhaus 1
D-4300 Essen 1 (DE)

EP 0 111 049 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Einrichtung zum Verstellen der umlaufenden Flügelblätter von axialen Strömungsmaschinen mittels einer koaxial zur Rotationsachse in der Maschinenwelle angeordneten Servozylinder-Kolben-Einheit und einem ihr funktionell zugeordneten Steuerorgan, das außer seiner Nullstellung dem Servokolben Drucköl zuführt und sich nach der Flügelblattverstellung mit Hilfe eines mit dem Servokolben vereinten Rückführgestänges in die Nullstellung zurückbewegt.

Eine derartige Einrichtung ist bereits nach dem Artikel « Verstellpropeller für Schiffe » in der Neuen Züricher Zeitung vom 24. Juli 1958, Blatt 9, bekannt (Escher-Wyss-Verstellpropeller). Sie stellt das Servosystem dar, dessen wesentlicher Bestandteil eine Druckölpumpe und ein mit ihr kombinierter Steuerschieber ist. Die Pumpe ist von Null bis Volleistung stufenlos regulierbar, weist im Leerlauf keine nennenswerten Umwälzverluste auf und ist in der Förderrichtung ohne Änderung des Drehsinns umkehrbar. Der Steuerschieber ist mit der Pumpe funktionell gekoppelt und veranlaßt eine Ölförderung nur, wenn er aus seiner Nullstellung auf mechanischem oder elektrischem Wege herausbewegt wurde. Hat der Servolkolben in seinem Zylinder die gewünschte Stellung erreicht, dann bringt eine mit ihm verbundene Rückführung den Schieber wieder auf Nullstellung, und die Pumpe fördert nur soviel Öl, wie unter Umständen notwendig ist, um Druck oder Volumenverluste auszugleichen.

Diese Einrichtung weist eine hohe Anzahl der Bauteile auf, die außerdem noch präzis bearbeitet werden müssen. Die Druckölpumpe ist eine Spezialkonstruktion und nicht ohne weiteres greifbar.

Auch andere Verstellsysteme, zum Beispiel die Mitsubishi-Verstellung, arbeiten mit Ölpumpe und nach einem Verstellvorgang in die Nullstellung rückgeführtem Steuerschieber. Sie sind sogar gegenüber der Escher-Wyss-Ausführung insofern nachteilig, als bei ihnen vor dem Steuerschieber stets ein hoher Öldruck ansteht. Dadurch ist eine ständige Umwälzung der Ölmenge bedingt. deren Energie in Überströmventilen vernichtet werden muß, wenn sie zwischen zwei Verstellungen nicht ausgenutzt ist. Das bringt aber eine hohe Erwärmung des Öles mit sich, so daß ein Ölkühler unerläßlich ist.

Aus FR-A-861 296 ist eine hydraulische Stelleinrichtung mit einer Axialpumpe als Erzeuger des Drucköls bekannt. Dabei hat die Pumpe einen Knickwinkel. der mittels einer Vielzahl von Bauelementen herbeigeführt ist. Das ist umständlich.

Der Erfindung liegt die Aufgabe zugrunde, eine Einrichtung der eingangs genannten Art so auszubilden. daß sie ohne Einbuße an der Funktionsqualität weniger Teile als der Stand der Technik aufweist. Die erforderliche Ölpumpe soll eine handelsübliche sein, und Präzisionsbearbeitung der Teile soll vermieden werden.

Die Erfindung löst diese Aufgabe dadurch, daß das Steuerorgan eine Axialkolbenpumpe ist, die als Erzeuger des Drucköls dient, mit ihrem Schwenkkörper außerhalb ihres Antriebsgelenkes noch um einen Gleitstein schwenkbar gehalten ist, dessen Führung durch den Servokolben und mit dem Rückführgestänge verschiebbar ist, und daß etwa parallel zu der Maschinenwelle eine drehbar aber axialfest gelagerte und mit einem Getriebemotor verbundene Gewindespindel vorhanden ist, die in einen Gewindeblock des Pumpenmotors eingreift.

Dieses System benutzt für die Verstellung der Flügel von Schiffspropellern oder der Schaufelblätter von Pumpen und Turbinen die in der Technik und im Handel altbewährte Axialkolbenpumpe mit abknickbarem Schwenkkörper, deren besondere Eigenschaften als Steuerorgan ausgenutzt werden. Durch die starre Abstützung des Schwenkkörpers der Pumpe über die Gleitsteinkonstruktion auf den Servokolben erreicht man eine sehr einfache Zwangsrückführung der Pumpe, die sich somit nach jeder Verstellung in einer neuen Lage stabilisiert, die dem gewünschten Verstellungsgrad der Flügel entspricht. Ein gesonderter Steuerschieber ist somit entbehrlich. Auch entfällt der Aufwand für eine vielteilige Rückführungsmechanik. Die Druckhaltung des Systems ist mit sehr geringen Fördermengen bewerkstelligt, so daß der Stromverbrauch der Axialkolbenpumpe gering bleibt. Da die Druckhaltung mit einer beinahen Nullförderung durchgeführt wird, entfällt die sonst bei konstanter Druckölumwälzung gegen Überströmventile eintretende Ölaufheizung und die damit verbundene aufwendige Ölrückkühlung. Leckagen des Systems, die eine Servokolbenbewegung und infolge der Zwangsrückführung eine sofortige, geringfügige Pumpenverstellung und damit Pumpenfunktion verursachen, werden aufgrund der hohen Ansaugfähigkeit der Pumpe aus der Ölreserve sofort ergänzt, und zwar um die Nullstellung der Pumpe herum, da sie sofort anspricht. Daraus ergeben sich niedrige Drücke und anspruchslose Dichtungskonstruktionen zwischen der Umgebung, der Maschinenwelle und dem Rückführgestänge. Durch die Gewindespindel ist der Pumpenmotor etwa parallel zur Maschinenwelle stufenlos versetzbar.

Zweckmäßig ist das Rückführgestänge hohl ausgebildet. Dabei ist vorteilhaft dieses Gestänge einen Ringkanal um sich bildend in der Maschinenwelle angeordnet, es mündet jenseits des Servokolbens aus und befindet sich mit dem freien Ende — den Ringkanal verlassend — in einer dichten Kammer, die über einen Schlauch mit einem der Stutzen der Axialkolbenpumpe verbunden ist. Diese Ausbildung gestattet es, die beiden Seiten der Servokolbens voneinander mit nur wenigem Aufwand zu trennen. Um das Öl jenseits des Servokolbens wirken zu lassen, genügt es, das Rückführgestänge mit einer durchgehenden Axialbohrung zu versehen und seine beiden Enden in die dichte Kammer bzw. in einen Durchbruch des Servokolbens ausmünden zu lassen. In dem Ringkanal kann das Öl mit der anderen Seite des Servokolbens kommunizieren.

Eine Eigenart der Konstruktion ist darin zu erblicken, daß das Rückführgestänge einerseits sich mit dem Servokolben und der Maschinenwelle dreht und zum anderen einen rotationsfreien Bereich haben muß, um die Axialkolbenpumpe abstützen zu können. Das Rückführgestänge muß daher bei Aufrechterhaltung seiner axialen Durchströmbarkeit getrennt sein. Hierfür ist zweckmäßig ein aus der Kammer herausgeführter und mit der führung des Gleitsteines vereinter Fortsatz vorgesehen, gegen den das Rückführgestänge unter Freilassung einer Radialbohrung in sich selbst drehbeweglich andauernd anliegt.

Es hat sich als besonders vorteilhaft erwiesen, die Beaufschlagung der rückwärtigen Kolbenseite durch eine weitere, im Anschluß an die Maschinenwelle befindliche dichte Kammer zu ermöglichen, die über einen Schlauch mit einem der Stutzen der Axialkolbenpumpe verbunden ist, in die der Ringkanal einmündet und durch die das Rückführgestänge hindurchragt.

Im folgenden wird die Erfindung anhand eines in der Zeichnung schematisch dargestellten Ausführungsbeispiels erläutert.

Es zeigen

Figur 1 eine mit einem Schwenkkörper versehene Axialkolbenpumpe im Längsschnitt während der Ölförderung,

Figur 2 die Axialkolbenpumpe im Längsschnitt, der gegenüber der Fig. 1 um 90° versetzt ist, und bei der Nullförderstellung,

Figur 3 einen Schnitt durch die Druck- und Saugkanäle im Pumpenkörper und

Figur 4 eine Axialverstelleinrichtung im Längsschnitt, die auf die Funktion der Axialkolbenpumpe abgestellt ist.

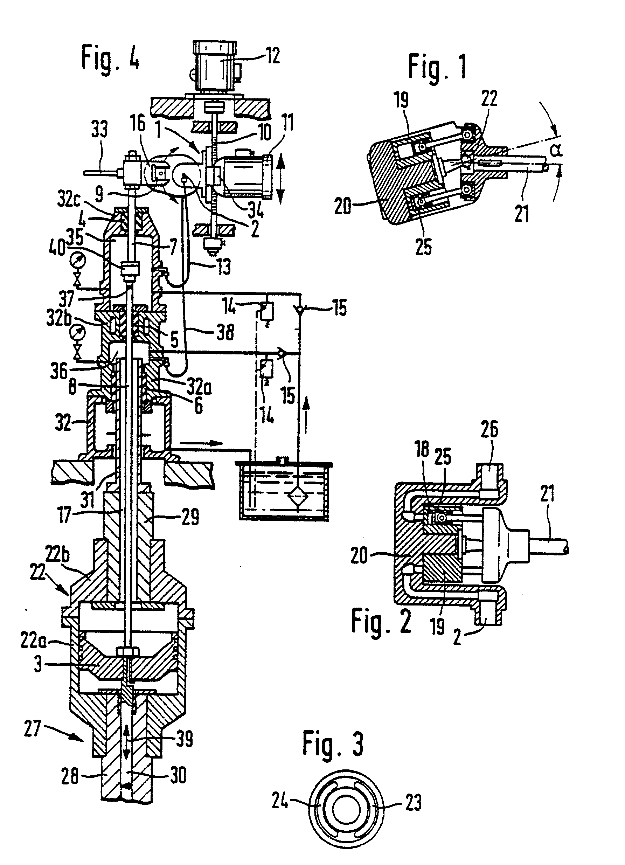

Bei Axialkolbenpumpen 1 (Figur 1 bis 3) sind ganz allgemein mehrere Zylinder 18 achsparallel in einer Trommel 19 angeordnet. Bei der abgebildeten Pumpe 1 ist die Trommel 19 auf einem Schwenkkörper 20 drehbar gelagert und mit einer Welle 21 über ein Antriebsgelenk 22 verbunden. Öl läuft über einen Absaugkanal 23 in dem Schwenkkörper 20 Kolben 25 zu und nach Drehung der Trommel 19 um 180° durch einen Druckkanal 24 aus den Zylindern 18 ab. Die Kanäle 23 und 24 münden in Stutzen 26 bzw. 2, die zusammen mit dem Antriebsgelenk 22 in den sämtlichen Figuren der Zeichnung in einer Linie liegen. Die Pumpe dieser Art haben bei α = 0° eine Nullförderung. Bei Abknicken des Schwenkkörpers 20 gegen die Welle 21 wird ein Kolbenhub und damit die Förderung eingeleitet, die sich in ihrer Förderrichtung nach der Abknickungsrichtung einstellt, das heißt beim Überschreiten der Nullförderlage kehrt sich die Förderrichtung um. Je größer der Schwenkwinkel α ist, um so größer ist die Fördermenge.

Mit der Einrichtung gemäß Figur 4 sollen die Schaufelblätter einer Pumpe verstellt werden. Der in der Pumpennabe untergebrachte Verstellmechanismus ist nicht Gegenstand der Erfindung. Hier genügt es zu sagen, daß eine verstellstange 30 zu diesem Mechanismus führt und in Richtung des Pfeiles 39 hin uner her bewegbar ist. Es ist eine rotierende Maschinenwelle 27 vorhanden, die im wesentlichen aus einer Pumpenwelle 28 und einer Motorwelle 29 besteht. Letztere ist durch einen achsversetzten Motor angetrieben, der nicht dargestellt ist. Diese Bindung zwischen den beiden Wellenteilen 28 und 29 ist durch als starre Kupplung ausgebildete Zylinderhälften 22a und 22b hergestellt, die beide zusammen einen Servozylinder 22 ergeben. Die Verstellstange 30 ist in der Pumpenwelle 28 angeordnet.

Die Verstellung geht von der Axialkolbenpumpe 1 aus, die mit ihrem Pumpenmotor 11 über einen Gewindeblock 34 auf einer Gewindespindel 10 vorgesehen ist. Ein Getriebemotor 12 dreht die Gewindespindel 10 und hebt oder senkt damit das Pumpenaggregat. Die Axialkolbenpumpe 1 ist an ihrem Saugstutzen 26 und Druckstutzen 2 drehbar gelagert und stellt sich, da sie an einem zweiten Drehpunkt — in Gestalt eines Gleitsteines 9 — in einer Führung 16 gehalten ist, auf einen Abknickwinkel ein. Damit stellt sich je nach Einstellrichtung eine Fördermenge und eine Förderrichtung ein, die über Schläuche 13 und 38 und ein hohles Rückführgestänge 8 unter einen Servokolben 3 im Servozylinder 22 oder durch einen Ringkanal 17 über den Servokolben 3 geleitet wird. Das Rückführgestänge 8 befindet sich in der Mitte der Maschinenwelle 27, und der Ringkanal 17, der in der Motorwelle 29 vorgesehen ist, umgibt es.

Zum Zwecke der Ölzu- und Abführung ragt die Motorwelle 29 mit einer koaxialen Hülse 31 in ein äußerlich rohrförmiges Gehäuse hinein, das aus übereinander gestellten Gehäuseteilen 32, 32a, 32b und 32c besteht. In dem Gehäuseteil 32c ist eine abgedichtete Kammer 35 vorhanden, in die das Rückführgestänge 8 drehend hineinragt und dort gegen einen nicht rotierenden aber verschiebbaren Fortsatz 7 ständig anliegt. Dieser Fortsatz 7 trägt außen die Gleitsteinführung 16 und ist mit einem Anzeiger 33 versehen, um den Grad der Verstellung anzuzeigen. Das obere Ende des Rückführgestänges 8 ist in einem Lager 40 abgefangen, das in nicht dargestellter Weise an der Wand des Gehäuseteiles 32c befestigt ist und sowohl das Umlaufen als auch das Verschieben des Rückführgestänges 8 gestattet. In diesem ist unter dem Lager 40 eine Radialbohrung 37 für den Öleintritt oder Ölaustritt vorhanden.

Die Hülse 31 mündet in eine weitere abgedichtete Kammer 36 aus, die in dem Gehäuseteil 32b angeordnet ist. Damit kann das Öl mit der oberen Seite des Servokolbens 3 kommunizieren. Die Schläuche 13 und 38 münden dabei in die Kammer 35 bzw. 36.

Wenn der Servokolben 3 verstellt wird, folgt das Rückführgestänge 8 als Zwangsrückführung die Kolbenbewegung und zieht oder schiebt den Gleitstein 9 der Axialkolbenpumpe 1 in die dargestellte Nullförderlage zurück.

Dichtungen 4, 5 und 6 dichten die Kammer 35 und 36 gegeneinander und gegen Atmosphäre ab. Bei Leckageverlusten dieser Dichtungen ergibt sich zwangsläufig eine Servokolbenbewegung, die diesmal in umgekehrter Reihenfolge über die Zwangsrückführung und den Gleitstein 9 einen Kolbenhub der Axialkolbenpumpe 1 einstellt. Somit wird ein der Servokolbenbewegung entgegengesetzter Ölstrom ausgelöst, so daß der Servokolben 3 wieder bis zur Nullförderlage der Axialkolbenpumpe 1 zurückgeführt wird.

Da geringe Lageveränderungen des Servokolbens 3 auch nur geringe Kolbenhübe der Axialkolbenpumpe 1 verursachen, stellt sich ein kleiner Daueranstellwinkel ein, der die Leckölverluste ergänzt und die Servokolbenstellung stabilisiert.

Ölvolumenverluste an der Atmosphärenseite werden durch die Saugfähigkeit der Axialkolbenpumpe 1 oder durch eine angebaute Speisepumpe über unvorgespannte Rückschlagventile 15 ergänzt. Die Druckhaltung wird durch Druckbegrenzungsventile 14 abgegrenzt.

Bei der mittleren Dichtung 5 erfolgt eine drehende und schiebende Bewegung des Rückführgestänges 8. An dieser Stelle wird daher für die Druckraumbegrenzung eine Spaltdichtung (Gleitlagerung) gewählt.

Bei Instabilität des Druckpunktes der verstellbaren Schaufelblätter kann der Servokolben 3 mit einer nicht gezeigten degressiven Feder einseitig vorgespannt werden. In diesem Fall ergibt sich bei Ausfall der hydraulischen Einrichtung eine Endlagenstabilisierung. Dieses Prinzip wird bereits für Schiffspropeller praktiziert.

## Patentansprüche

1. Einrichtung zum Verstellen der umlaufenden Flügelblätter von axialen Strömungsmaschinen mittels einer koaxial zur Rotationsachse in der Maschinenwelle (27) angeordneten Servozylinder-Kolben-Einheit (22, 3) und einem ihr funktionell zugeordneten Steuerorgan, das außer seiner Nullstellung dem Servokolben (3) Drucköl zuführt und sich nach der Flügelblattverstellung mit Hilfe eines mit dem Servokolben (3) vereinten Rückführgestänges (8) in die Nullstellung zurückbewegt, dadurch gekennzeichnet, daß das Steuerorgan eine Axialkolbenpumpe (1) ist, die als Erzeuger des Drucköls dient, mit ihrem Schwenkkörper (20) außerhalb ihres Antriebsgelenkes (22') noch um einen Gleitstein (9) schwenkbar gehalten ist, dessen Führung (16) durch den Servokolben (3) und mit dem Rückführgestänge (8) verschiebbar ist, und daß etwa parallel zu der Maschinenwelle (27) eine drehbar aber axialfest gelagerte und mit einem Getriebemotor (12) verbundene Gewindespindel (10) vorhanden ist, die in einen Gewindeblock (34) des Pumpenmotors (11) eingreift.

2. Einrichtung nach Anspruch 1, dadurch gekennzeichnet, daß das Rückführgestänge (8) hohl ausgebildet ist.

3. Einrichtung nach Anspruch 2, dadurch gekennzeichnet, daß das Rückführgestänge (8) einen Ringkanal (17) um sich bildend in der Maschinenwelle (27) angeordnet ist, jenseits des Servokolbens (3) ausmündet und mit dem freien Ende — den Ringkanal verlassend — sich in einer dichten Kammer (35) befindet, die über einen Schlauch (13) mit einem der Stutzen (2, 26) der Axialkolbenpumpe (1) verbunden ist.

4. Einrichtung nach Anspruch 3, gekennzeichnet durch einen aus der Kammer (35) herausgeführten und mit der Führung (16) des Gleitsteines (9) vereinten Fortsatz (7), gegen den das Rückführgestänge (8) unter Freilassung einer Radialbohrung (37) in sich selbst drehbeweglich andauernd anliegt.

5. Einrichtung nach Anspruch 3, gekennzeichnet durch eine weitere, im Anschluß an die Maschinenwelle (27) befindliche dichte Kammer (36), die über einen Schlauch (38) mit einem der Stutzen (26, 2) der Axialkolbenpumpe (1) verbunden ist, in die der Ringkanal (17) einmündet und durch die das Rückführgestänge (8) hindurchragt.

## Claims

1. Apparatus for adjusting the rotating blades of axial fluid flow machines by means of a servo cylinder and piston unit (22, 3) which is situated coaxially with respect to the axis of rotation in the machine shaft (27), and with a control device which is associated with said unit functionally and which outside of its zero position feeds oil under pressure to the servo piston (3) and, after blade adjustment, moves back into the zero position with the help of a return rod (8) joined to the servo piston (3), characterised in that the control device is an axial piston pump (1) which serves to produce the oil under pressure and, besides being pivotable at its drive joint (22'), is also held with its swivel body (20) to be swivellable about a slide block (9) whose guide (16) is displaceable by the servo piston (3) and with the return rod (8), and that substantially parallel to the machine shaft (27) there is provided a screwthreaded spindle (10) which is connected to a geared motor (12) and which is mounted to be rotatable but axially stationary, and which engages in a screwthreaded block (34) of the pump motor (11).

2. Apparatus according to claim 1, characterised in that the return rod (8) is of hollow construction.

3. Apparatus according to claim 2, characterised in that the return rod (8) is situated, forming an annular duct (17) around itself, in the machine shaft (27), debouches beyond the servo piston (3), and has its free end — issuing from the annular duct — situated in a sealing-tight chamber (35) which communicates via a flexible tube (13) with one of the unions (2, 26) of the axial piston pump (1).

4. Apparatus according to claim 3, characterised by a continuation element (7) which extends out of the chamber (35) and is joined to the guide (16) of the slide block (9) and against which the return rod (8) permanently abuts in rotationally movable manner whilst leaving free a radial bore (37) in itself.

5. Apparatus according to claim 3, characterised by a further sealing-tight chamber (36) which is situated after the machine shaft (27) and which is connected *via* a flexible tube (38) to one of the unions (26, 2) of the axial piston pump (1), and into which the annular duct (17) debouches and through which the return rod (8) extends.

## Revendications

1. Dispositif de réglage des aubes tournantes de turbomachines axiales au moyen d'un servovérin (22, 3) placé dans l'arbre (27) de la machine coaxialement à l'axe de rotation et d'un organe de commande associé fonctionnellement à ce vérin qui, en dehors de sa position zéro, envoie de l'huile sous pression au servopiston (3) et, après le réglage des aubes, revient en position zéro à l'aide d'une tige de rappel (8) réunie au servopiston (3), caractérisé par le fait que l'organe de commande est une pompe à pistons axiaux (1) qui sert de générateur d'huile sous pression et dont le corps basculant (20) est, en dehors de l'articulation d'entraînement (22) de la pompe, articulé à un bloc coulissant (9) dont le guidage (16) est déplaçable par le servopiston (3) et avec la tige de rappel (8), et qu'à peu près parallèlement à l'arbre (27) de la machine est placée une vis (10) montée tournante mais fixe axialement qui est accouplée à un motoréducteur (12) et s'engage dans un bloc taraudé (34) du moteur (11) de la pompe.

2. Dispositif selon la revendication 1, caractérisé par le fait que la tige de rappel (8) est creuse.

3. Dispositif selon la revendication 2, caractérisé par le fait que la tige de rappel (8) est placée dans l'arbre (27) de la machine de façon à former autour d'elle un conduit annulaire (17), qu'elle débouche au-delà du servopiston (3) et que son extrémité libre, sortant du conduit annulaire, se trouve dans une chambre étanche (35) qui est reliée par un flexible (13) à une des tubulures (2, 26) de la pompe à pistons axiaux (1).

4. Dispositif selon la revendication 3, caractérisé par un appendice (7) sortant de la chambre (35), réuni au guidage (16) du bloc coulissant (9) et contre lequel la tige de rappel (8) s'appuie en permanence en tournant, en laissant dégagé un trou radial (37) fait dans elle-même.

5. Dispositif selon la revendication 3, caractérisé par une autre chambre étanche (36) faisant suite à l'arbre (27) de la machine qui est reliée par un flexible (38) à une des tubulures (26, 2) de la pompe à pistons axiaux (1), dans laquelle débouche le conduit annulaire (17) et par laquelle passe la tige de rappel (8).

Fig. 4

Fig. 1

Fig. 2

Fig. 3